# EUROPÄISCHE PATENTSCHRIFT

(11) **EP 0 921 931 B1**
(45) Veröffentlichungstag und Bekanntmachung des Hinweises auf die Patenterteilung: **11.09.2002**
(21) Anmeldenummer: 97918986.7
(22) Anmeldetag: 14.08.1997
(51) Int. Cl.: B29C 47/64, B29C 47/00

(54) **SCHNECKENEXTRUDER**
SCREW-TYPE EXTRUDER
EXTRUDEUSE A VIS

(30) Priorität: 16.08.1996 WO PCT/EP96/03611
(43) Veröffentlichungstag der Anmeldung: 16.06.1999
(73) Patentinhaber: Meeth, Ernst Josef, D-54531 Wallscheid (DE)
(72) Erfinder: Meeth, Ernst Josef, D-54531 Wallscheid (DE)
(74) Vertreter: Herzog, Markus, Dipl.-Phys. Dr.
(86) Internationale Anmeldenummer: EP9704448
(87) Internationale Veröffentlichungsnummer: WO98007559

(56) Entgegenhaltungen:
- EP-A- 0 589 321
- DE-A- 4 227 018
- DE-C- 610 557
- DATABASE WPI Section Ch, Week 8240, Derwent Publications Ltd., London, GB; Class A31, AN 82-85368E, XP002049423 & SU 887 213 A (SYNTH FIBRE MACH) 07 Dezember 1981
- PATENT ABSTRACTS OF JAPAN vol. 011, no. 131 (M-584), 24.April 1987 & JP 61 272124 A (SEKISUI PLASTICS CO LTD), 2.Dezember 1986,
- PATENT ABSTRACTS OF JAPAN vol. 013, no. 041 (M-791), 30.Januar 1989 & JP 63 251220 A (ISHIKAWAJIMA HARIMA HEAVY IND CO LTD), 18.Oktober 1988,
- WOLTERS J: "WERKSTOFFMESSE FUER RECYCLING" KUNSTSTOFFE, Bd. 83, Nr. 8, 1.August 1993, Seiten 610-612, XP000384150
- MACZKO J: "EXTRUSION SYSTEM RECYCLES CONTAMINATED PLASTIC WASTE" PLASTICS ENGINEERING, Bd. 44, Nr. 6, Juni 1988, Seiten 39-41, XP000020963
- REIMKER M ET AL: "INTRUSIONSANLAGE ZUM AUFARBEITEN GEMISCHTER KUNSTSTOFFE INTRUSION PLANT FOR REPROCESSING MIXED PLASTICS" KUNSTSTOFFE, Bd. 83, Nr. 1, 1.Januar 1993, Seiten 23-25, XP000330655
- "KONSTANTE SCHMELZEHOMOGENITAT DANK MISCHSCHNECKENSPITZE" PLASTVERARBEITER, Bd. 43, Nr. 1, 1.Januar 1992, Seite 102 XP000246174

## Beschreibung

Die Erfindung betrifft einen EIN-Schneckenextruder zur Verarbeitung von thermoplastifizierbaren Massen gemäß dem Oberbegriff des Anspruchs 1.

Der erfindungsgemäß zu gestaltende EIN-Schneckenextruder ist insbesondere zur Aufbereitung von thermisch empfindlichen Kunststoffschmelzen bestimmt.

Die Bestrebungen bei der Aufbereitung von Kunststoffen sind dahingehend, durch vielfältige konstruktive Modifikationen der verfahrenstechnischen Wirkelemente die Prozesse des Scherens, Mischens und Stauens des Kunststoffes zu verbessern, um die Qualität des Endproduktes zu erhöhen, die Mengenleistung zu steigern und die Kosten der Produktionsanlage zu senken. Es sind Extruder bekannt, die zur Steigerung der Wirksamkeit dieser vorbenannten Prozesse, insbesondere der Verbesserung des Scherens und Mischens in der plastischen Masse, im Zylinder des Extruders Schneckenelemente mit Stau- und Mischwirkung besitzen.

Diese Elemente sind unterschiedlich ausgeführt, beispielsweise mit achsparallelen Einschnitten zur Erzeugung eines hydrodynamischen Druckes in einem in Drehrichtung sich öffnenden Spalt (DE 35 33 225) oder durch Mischelemente, die in Umfangsrichtung ausgerichtete Einfräsungen aufweisen und zungenförmige Mischkörper aufweisen (DE 42 27 018).

Diese bekannten Elemente und ihre Anordnung auf der Extruderschnecke lassen aber nicht die angestrebten Effekte in vollem Umfang erzielen.

Aus der DATABASE WPI Section Ch, Week 8240 Derwent Publications Ltd., London, GB; Class A31, AN 82-85368E XP002049423 & SU 887 213 B (SYNTH FIBRE MACH), 7. Dezember 1981 ist ein EIN-Schneckenextruder bekannt, bei dem eine Extruderschnecke für thermoplastifizierbare Massen in einem Extruderzylinder aufgenommen ist, der in seinem Endbereich mit einer Homogenisierungskammer verbunden ist. Eine konische innere Hüllfläche der Homogenisierungskammer umgibt einen mit dem materialflussabwärtigen Ende der Schnecke zur gemeinsamen Drehung verbundenen, im Wesentlichen ebenfalls konischen Homogenisierungsrotor. Der Rotor weist eine in materialflussabwärtiger Richtung wellenförmige Oberfläche mit aufeinanderfolgenden Abschnitten von abwechselnd größerem und kleinerem Durchmesser auf.

Aus der NL-A-9302125 (Derwent Abstracts Week 9531, AN 95-238516) ist eine Extrudieranlage mit einer dem Extruder nachgeordneten Zusatzeinrichtung bekannt. Gemäß diesem Dokument umfasst eine Extrudieranlage für ein Gemisch von thermoplastischen Kunststoffen und fasrigen Zuschlagsstoffen einen EIN-Schneckenextruder mit einer Einfüllstelle, einer Ausschubzone und Zusatzeinrichtungen, mit welcher Extrudieranlage Profilerzeugnisse für die Bauindustrie wie Dachprofile, Fenster und Türrahmen hergestellt werden.

Nachteilig bei den vorgenannten Einrichtungen ist jedoch, dass diese nur bedingt in der Lage sind, Kunststoffgemische zu verarbeiten, wie sie beispielsweise in der Kunststoff-Abfallsammlung "Duales System Deutschland" anfallen.

Demgegenüber liegt der Erfindung die Aufgabe zugrunde, eine Extrudiereinrichtung bereitzustellen, welche insbesondere zur Verarbeitung von Abfallkunststoffen geeignet ist.

Diese Aufgabe wird erfindungsgemäß durch die Merkmale des neuen Anspruchs_ 1 gelöst. Die erfindungsgemäße Ausbildung eines Einschneckenextruders erlaubt es unter Anwendung herkömmlicher oder nur geringfügig abgewandelter Schneckenextruder an diese eine Homogenisierstrecke anzubauen. Weiterhin wird es möglich, durch Anbau der Homogenisierstrecke an den Schneckenextruder den Homogenisierungsgrad, der am Ausgang des Schneckenextruders notwendig ist, herabzusetzen und dennoch am Ausgang der Gesamteinrichtung eine für die jeweiligen Anforderungen ausreichende Homogenisierung zu erreichen. Wenn der Schneckenextruder somit in seiner Länge gekürzt werden kann, so bedeutet dies eine erhebliche Herabsetzung des Investitionsaufwands für den Schneckenextruder, ohne daß diese Einsparung durch die Gestaltung der Homogenisierstrecke voll verbraucht wird.

Gemäß einer Weiterbildung der Erfindung ist vorgesehen, daß der Innendurchmesser der Umfangsfläche der Homogenisierungskammer in Flußrichtung der thermoplastifizierten Masse abnimmt und daß der Homogenisierungsrotor eine dem Durchmesserverlauf der Homogenisierungskammer annähernd folgende Hüllfläche besitzt.

Durch diese Maßnahme wird die Voraussetzung dafür geschaffen, daß im stromaufwärtigen Teil des Homogenisierungsrotors wegen des dort vorhandenen größeren Außendurchmessers des Homogenisierungsrotors intensive Scherwirkungen auftreten, daß diese Scherwirkungen dann mit zunehmender Durchmesserverringerung des Homogenisierungsrotors kleiner werden, daß aber durch die zunehmende Durchflußquerschnittsverringerung größere Durchflußgeschwindigkeiten erzielt werden, die ihrerseits zur weiteren Homogenisierung beitragen können. Auf diese Weise können insbesondere thermische Schädigungen von wärmesensiblen Bestandteilen vermieden werden, und das Spektrum der aufschmelzbaren Bestandteile kann vergrößert werden.

Eine besonders einfache Konstruktion ergibt sich, wenn die Homogenisierungskammer einen konischen Verlauf und der Homogenisierungsrotor eine diesem konischen Verlauf angenäherte konische Hüllfläche besitzt.

Der Grad der Homogenisierung richtet sich nach den Dimensionen der Homogenisierstrecke. Aus diesem Grunde ist vorgesehen, daß durch den Homogenisierungsrotor einerseits und durch die Umfangsfläche der Homogenisierungskammer andererseits in abwechselnder Reihenfolge Zonen von verengtem Durchflußquerschnitt und Zonen von erweitertem Durchflußquerschnitt gebildet sind. Durch den mehrfachen Übergang von einer Staustrecke in einen erweiterten Durchflußquerschnitt und umgekehrt wird ein besonders hoher Grad der Homogenisierung erreicht.

Insbesondere ist vorgesehen, daß eine Zone verengten Durchflußquerschnitts durch einen stauenden Rotorabschnitt und eine in Flußrichtung anschließende Zone erweiterten Durchflußquerschnitts durch einen gegenüber dem stauenden Rotorabschnitt radial zurückgesetzten Rotorabschnitt jeweils nach radial innen begrenzt sind.

Für eine intensive Scherwirkung im Bereich der verengten Durchflußquerschnitte ist es vorteilhaft, wenn die Mantelfläche eines stauenden Rotorabschnitts mit der Umfangsfläche der Homogenisierungskammer einen sich in Flußrichtung erweiternden Durchflußspalt bildet. Dabei kann die Mantelfläche des stauenden Rotorabschnitts im wesentlichen konisch sein, während die radial zurückgesetzten Rotorabschnitte eine annähernd zylindrische Mantelfläche besitzen können.

Ausgeprägte Übergänge von durchflußquerschnittgrößeren Erweiterungszonen und durchflußquerschnittkleineren Stauzonen lassen sich erreichen, wenn die Mantelfläche eines stauenden Rotorabschnitts an dessen flußaufwärtigem Ende einen größeren Durchmesser besitzt als ein flußaufwärts anschließender, radial zurückgesetzter Rotorabschnitt.

Es wurde oben schon angedeutet, daß die erfindungsgemäße Einrichtung insbesondere zur Verarbeitung von Abfallkunststoffen geeignet sein soll; es muß deshalb mit Verunreinigungen gerechnet werden, auch wenn bei der Aufbereitung des Eingangsmaterials des Schneckenextruders Abtrennmaßnahmen zur Abtrennung von harten Fremdkörpern getroffen werden. Im Hinblick darauf ist vorgesehen, daß in die Mantelfläche eines stauenden Rotorabschnitts mindestens eine sich über die Länge des stauenden Rotorabschnitts erstreckende, nach radial außen offene Nut eingearbeitet ist. Durch diese Maßnahme wird erreicht, daß ohne Rücksicht auf Fremdstoffe, die Zonen verengten Durchflußquerschnitts im Hinblick auf intensive Scherwirkung sehr eng gehalten werden können und dennoch der Durchgang von harten Fremdstoffkörpern und unaufgeschmolzenen Kunststoffbestandteilen ohne Verstopfungsgefahr gewährleistet ist.

Gemäß einer Weiterbildung der Erfindung kann die Nut dabei im wesentlichen parallel zu einer die Rotorachse enthaltenden Ebene verlaufen. Dies ist aber nicht zwingend.

Um Toträume im Fließweg der Schmelze zu vermeiden wir vorgeschlagen, daß der Nutboden am stromaufwärtigen Ende eines stauenden Rotorabschnitts im wesentlichen stufenlos an die Mantelfläche eines stromaufwärts angrenzenden, radial zurückgesetzten Rotorabschnitts anschließt und am stromabwärtigen Ende des stauenden Rotorabschnitts im wesentlichen stufenlos an die Mantelfläche des stromabwärts anschließenden, radial zurückgesetzten Rotorabschnitts anschließt und zwischen den beiden Enden des jeweiligen stauenden Rotorabschnitts im wesentlichen stetig, vorzugsweise geradlinig, verläuft. Die Angabe "stufenlos" soll dabei nicht etwa ausschließen, daß der Nutboden der Nut eines stauenden Rotorabschnitts an mindestens einem Ende dieses stauenden Rotorabschnitts über einen Knick in die Mantelfläche des jeweils anschließenden, radial zurückgesetzten Rotorabschnitts anschließt.

Nach einer bevorzugten Ausführungsform ist vorgesehen, daß am stromaufwärtigen Ende und am stromabwärtigen Ende des Homogenisierungsrotors jeweils ein stauender Rotorabschnitt vorgesehen ist. Durch diese Maßnahme wird bei relativ geringer Länge des Homogenisierungsrotors eine hohe Homogenisierungs- und Stauwirkung erreicht.

Die Zahl der stauenden Rotorabschnitte ist an sich beliebig. Sie ist im wesentlichen durch die mit steigendem Bauaufwand steigenden Investitionskosten beschränkt. Grundsätzlich gilt, daß der Homogenisierungsrotor mindestens zwei stauende Rotorabschnitte, vorzugsweise mindestens drei stauende Rotorabschnitte und höchst vorzugsweise mindestens vier stauende Rotorabschnitte, aufweisen sollte.

Eine Beruhigung des Schmelzflusses am Ausgang der Homogenisierungskammer kann dadurch erreicht werden, daß der Homogenisierungsrotor an seinem stromabwärtigen Ende eine Spitze von verringertem Durchmesser besitzt, wobei die Spitze konisch ausgebildet sein kann.

Bei der Bemessung des Nutquerschnitts wird man danach vorgehen, wie groß die größten zu erwartenden Hartstoffteilchen in dem zu verarbeitenden Material sind, damit diese noch durch die jeweilige Nut durchtreten können.

Ein stauender Rotorabschnitt kann mit einer Mehrzahl von Nuten über seinen Umfang verteilt ausgeführt sein, so daß die Verweilzeit etwaiger Hartstoffe in den Erweiterungszonen verkürzt werden kann, indem man durch in kurzen Winkelabständen liegende Nuten für häufig wiederkehrende Durchgangschancen sorgt.

Im Hinblick auf den weiter oben schon angesprochenen Gesichtspunkt der Nachrüstung oder Umgestaltung herkömmlicher EIN-Schneckenextruder kann es von Vorteil sein, wenn der Homogenisierungsrotor lösbar an dem stromabwärtigen Ende der Schnecke angebracht ist. Auf diese Weise kann die Herstellung der Extruderschnecken gesondert von der Herstellung der Homogenisierungsrotoren erfolgen. Dies ist für die Herstellungskosten günstig. Außerdem besteht die Möglichkeit, mehrere Typen von Extruderschnecken mit verschiedenen Homogenisierungsrotoren je nach Bedarf zu verbinden.

Es ist wünschenswert, die Durchflußquerschnitte insbesondere im Bereich der Zonen von verengtem Durchflußquerschnitt je nach der in den Extruder eingegebenen Eingangsmischung und nach den Anforderungen an die homogenisierte Ausgangsschmelze am Ausgang der Homogenisierstrecke variieren zu können. Dies kann jedenfalls dann, wenn die Umfangsfläche der Homogenisierungskammer und die Hüllfläche des Homogenisierungsrotors konisch sind, mit annähernd gleichem Konuswinkel dadurch ermöglicht werden, daß die Axialstellung des Homogenisierungsrotors relativ zu der Schnecke variabel ist. Dies läßt sich z.B. dadurch verwirklichen, daß zur Variation der Axialstellung des Homogenisierungsrotors gegenüber der Schnecke zwischen eine stromabwärtige Endfläche der Schnecke und eine stromaufwärtige Endfläche des Homogenisierungsrotors Beilagscheiben im Umgebungsbereich einer zentralen Verbindung zwischen der Schnecke und dem Homogenisierungsrotor vorgesehen sind.

Die Homogenisierungs- und Stauwirkung kann weiterhin dadurch variiert werden, daß die stauenden Rotorabschnitte und die radial zurückgesetzten Rotorabschnitte von zusammengesetzten Einzelkomponenten gebildet sind, ganz abgesehen davon, daß durch diese Maßnahme der Aufbau des Homogenisierungsrotors insgesamt verbilligt werden kann.

Um aus einem Fundus von verfügbaren Komponenten auch beim Anwender die Homogenisierungs- und Stauwirkung leicht verändern zu können, wird weiter vorgeschlagen, daß die Einzelkomponenten lösbar miteinander verbunden sind. Beim Hersteller bringt diese Maßnahme ebenfalls Vorteile, weil die Komposition eines jeweils gewünschten Homogenisierungsrotors aus einem Fundus von vorhandenen Komponenten erleichtert wird.

In der Praxis hat sich gezeigt, daß die axiale Länge der stauenden Rotorabschnitte in der Regel größer sein kann als die axiale Länge der radial zurückgesetzten Rotorabschnitte. Im Einzelfall wird man optimale Bedingungen durch einfache Vorversuche ermitteln können, was besonders leicht möglich ist, wenn einerseits eine axiale Verstellbarkeit des Homogenisierungsrotors und andererseits eine lösbare Zusammensetzung des Homogenisierungsrotors aus einzelnen Komponenten möglich ist.

Um bei gegebener Durchflußlänge der Homogenisierungskammer mit einem Fundus von Komponenten die unterschiedlichsten Stau- und Homogenisierungsbedingungen ohne Veränderung der Geometrie der Homogenisierungskammer vornehmen zu können, wird empfohlen, daß mehrere, vorzugsweise alle, stauenden Rotorabschnitte gleiche axiale Länge besitzen oder/und daß mehrere, vorzugsweise alle, radial zurückgesetzten Rotorabschnitte gleiche axiale Länge besitzen.

Es ist aber auch denkbar, auf die Homogenisierungsbedingungen dadurch Einfluß zu nehmen, daß die axiale Länge mindestens eines stauenden Rotorabschnitts und/oder mindestens eines radial zurückgesetzten Rotorabschnitts durch Beilagscheiben veränderbar ist.

Wenn der stromaufwärtige stauende Rotorabschnitt mit einer oder mehreren Nuten versehen ist, so ist es zulässig, daß die Mantelfläche zumindest eines stromaufwärtigen, stauenden Rotorabschnitts an ihrem stromaufwärtigen Ende einen Außendurchmesser besitzt, welcher gleich dem Innendurchmesser der Umfangsfläche der Homogenisierungskammer in der zugehörigen Axialposition ist.

Im Hinblick auf eine Nachrüstung oder Umgestaltung eines bekannten Schneckenextruders mit einer Homogenisierungs- und Staustrecke nach der Erfindung ist es von Vorteil, wenn die Homogenisierungskammer in einem Rohrabschnitt von annähernd entsprechender Länge ausgebildet ist, welcher an mindestens einem Ende Befestigungsmittel zum Anschluß an den Schneckenzylinder bzw. einen nachgeschalteten Verbraucher aufweist. Diese Maßnahme erleichtert auch die Herstellung des Schneckenzylinders einerseits und der Homogenisierungskammer andererseits, die als kleinere Teile leichter mechanisch bearbeitet werden können.

Der erfindungsgemäße EIN-Schneckenextruder mit nachgeschalteter Homogenisierstrecke ist insbesondere geeignet zur Herstellung einer strangbildungsfähigen Masse aus einem Gemisch von thermoplastischen Kunststoffen und Zuschlagstoffen, insbesondere faserigen Zuschlagstoffen, wie Getreidestroh. Dabei kann das Eingangsgemisch in Form von Pellets zugegeben werden, welche sowohl den Kunststoffanteil als auch in diesen eingebettet und schon vorverteilt die Zuschlagstoffe insbesondere faserigen Zuschlagstoffe enthalten können. Die faserigen Bestandteile des Eingangsgemisches können dabei vorzugsweise eine Teilchengröße von höchstens 5 mm, vorzugsweise von ca. 3 mm, maximaler Länge haben.

Ein erfindungsgemäß ausgestalteter Schneckenextruder kann insbesondere zur Herstellung von Profilmaterial für Fensterund Türenherstellung eingesetzt werden, etwa nach dem Intrusionsprinzip.

In einer erfindungsgemäß vorgesehenen Stau- und Homogenisierungsstrecke findet durch den geschlossenen Außendurchmesser und die Reduzierung der freien Masseeintrittsfläche der Kegelstumpfelemente in Extrusionsrichtung ein Schmelzestau verbunden mit einer Massedruckerhöhung sowie einer Zunahme der Fließgeschwindigkeit statt. Dies bewirkt wiederum eine Massetemperaturerhöhung verbunden mit einer Verbesserung der Fließfähigkeit, d. h. bei einer heterogenen Kunststoffschmelze schmilzt ein höherer Anteil der Kunststoffe des Kunststoffgemisches auf, und es erfolgt eine Verbesserung der stofflichen Homogenität der Kunststoffschmelze.

Eine weitere Beeinflussung der Intensität der vorgenannten Wirkungen erfolgt durch Variation der Größe der Nuten in den Kegelstumpfkörpern und durch Variation der Größe des jeweiligen Keilspalts zwischen einem Kegelstumpfkörper und der Umfangsflache der Homogenisierungskammer.

Die Erfindung betrifft weiter ein Stau- und Mischelement für einen EIN-Schneckenextruder entsprechend den Ansprüchen 36 - 44.

Die beiliegenden Figuren erläutern die Erfindung anhand eines Ausführungsbeispiels; es stellen dar:
- Fig. 1: ein Flußschema eines Verfahrens, bei dem der erfindungsgemäße Schneckenextruder zur Anwendung kommt;
- Fig. 2: eine Pelletierungseinrichtung zur Verwendung in dem Verfahren nach Fig. 1;

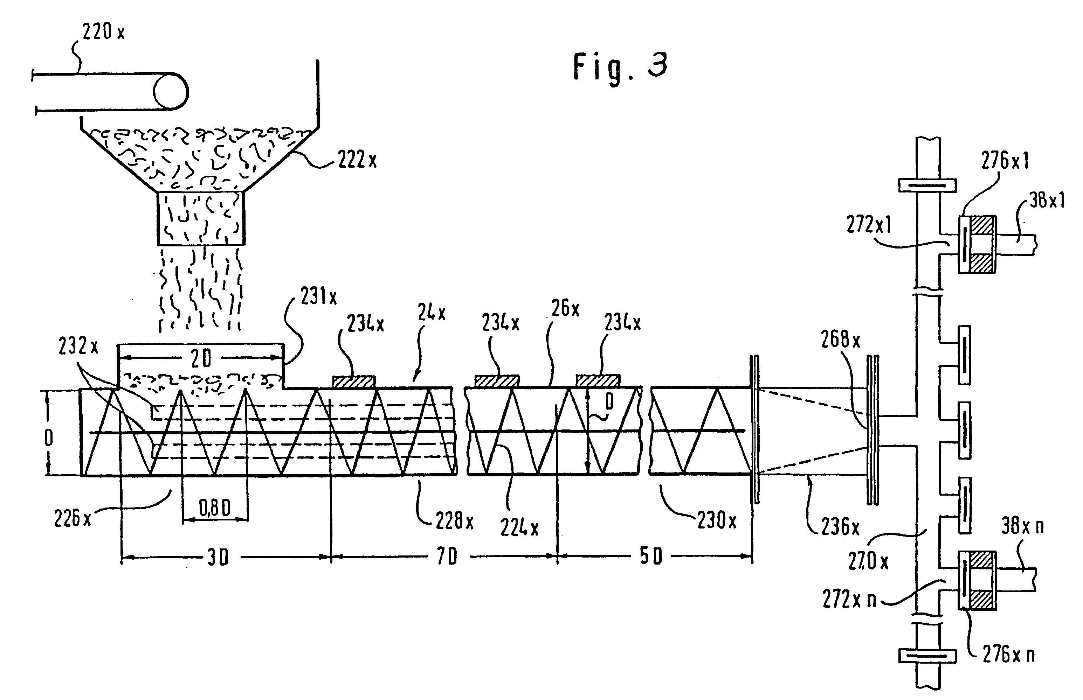

- Fig. 3: einen Schneckenextruder für das Verfahren nach Fig. 1 mit nachgeschalteter Stau- und Homogenisierungseinrichtung nach der Erfindung sowie einer Verteilereinrichtung;
- Fig. 4: Details zu der Stau- und Homogenisierungseinrichtung nach Fig. 3;
- Fig. 4a: eine Endansicht eines Staukörpers gemäß Fig. 4 in Pfeilrichtung IVa der Fig. 4;
- Fig. 5: die Verteilereinrichtung nach Fig. 3 mit nachgeschalteten Vorprofilbildungskanälen und einer Abnahmestation zur Abnahme von Vorprofilen aus Vorprofilbildungskanälen.

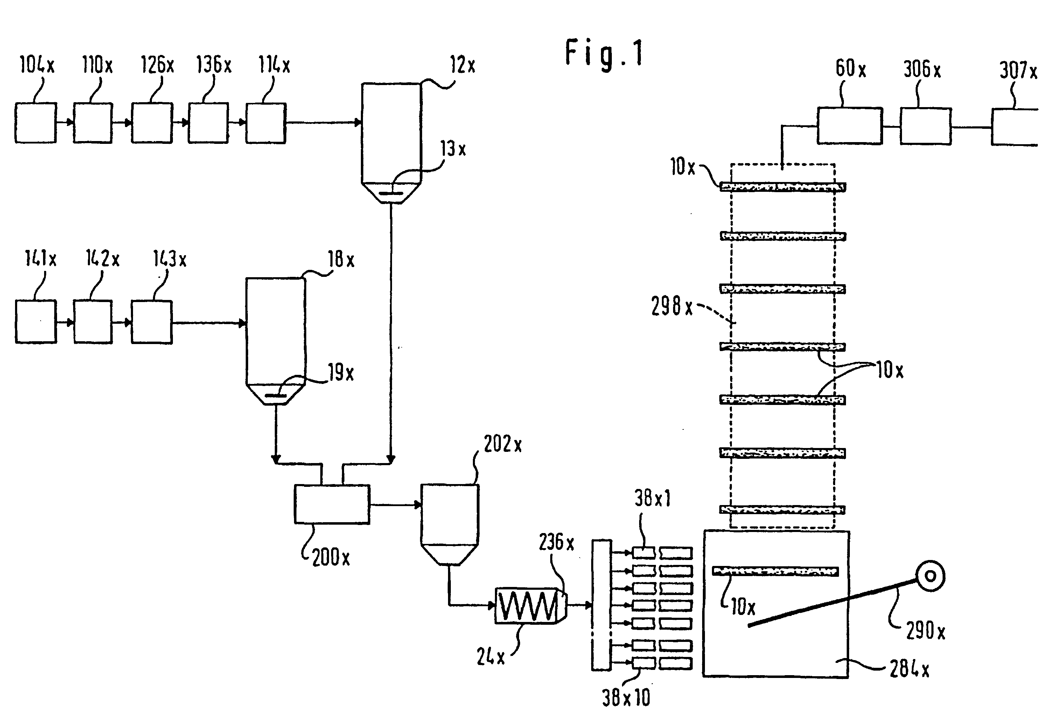

In Fig. 1 erhält man eine Gesamtübersicht über eine Verfahrensweise, bei welcher der erfindungsgemäße Schneckenextruder zur Anwendung kommt.

Mit 104x ist ein Ballenaufreisser bezeichnet, welchem Kunststoffballen aus Sammlungen des Dualen Systems Deutschland (DSD) zugeführt werden (erste Mischkomponente). Von dem Ballen aufreißer 104x gelangen die Kunststoffteile des jeweiligen Ballens zu einer Aussiebvorrichtung 110x, in welcher schwere Grobteile, z.B. Blechverschlußkapseln von Kunststoff-Flaschen, ausgesondert werden. Von der Aussiebvorrichtung 110x gelangen die so teilweise gereinigten Kunststoffbestandteile zu einer Zerkleinerungsvorrichtung 126x. In der Zerkleinerungsvorrichtung 126x werden die Kunststoffbestandteile auf eine Teilchengröße von ca. 20 mm gebracht. Die so zerkleinerten Kunststoffteilchen gelangen in eine Trocknungsanlage 136x, in welcher eine Trocknung auf ca. 1 Gew.% Wassergehalt erfolgt. Die getrockneten Kunststoffteilchen gelangen weiter in eine magnetische Ausscheidungseinrichtung 114x, in welcher etwaige ferromagnetische Bestandteile ausgeschieden werden. Schließlich gelangen die Kunststoffteilchen in ein Hochsilo 12x.

Man erkennt weiter in Fig. 1 eine Anlieferungsstation 141x, welcher Getreidestroh in Ballenform zugeführt wird (zweite Mischkomponente), wobei dort die Ballen zerrissen werden. Von der Anlieferungs- und Zerreißstation 141x gelangt das Getreidestroh in eine Zerfaserungseinrichtung 142x, in welcher das ungehäckselte Erntegut durch eine Mahlung auf ca. 3 mm lineare Teilchenlänge zerkleinert wird. Das so zerkleinerte Getreidestroh gelangt sodann in eine Trocknungseinrichtung 143x, in der es von Trockenluft durchströmt wird und auf einen Wassergehalt von ca. 1 Gew.% getrocknet wird, um schließlich in ein Hochsilo 18x zu gelangen. Im einzelnen können die Behandlungsstrecken 104x-12x und 141x-18x abgewandelt werden. Die anzuwendenden Behandlungsschritte hängen von der Beschaffenheit der jeweils angelieferten ersten und zweiten Mischkomponenten ab, die in 104x bzw. 141x in den Verfahrensablauf eingeführt werden.

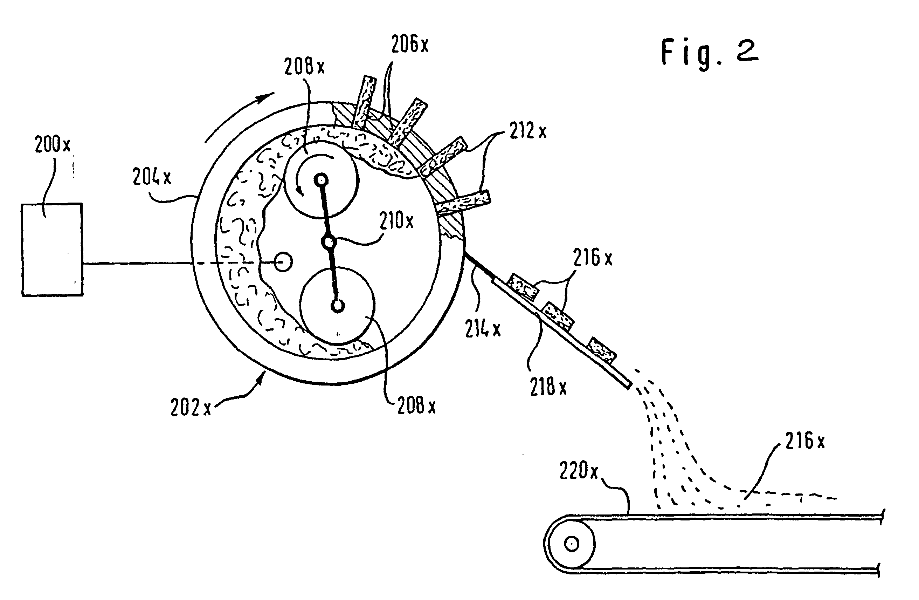

Von den Hochsilos 12x und 18x, die mit Auflockerungseinrichtungen 13x bzw. 19x zur Vergleichmäßigung der Gutabgabe ausgerüstet sein können, gelangen die beiden in dem jeweiligen Hochsilo gelagerten Mischkomponenten in eine Vormischeinrichtung 200x und von dieser in eine Matrizeneinrichtung 202x zur Herstellung von Pellets. Die Matrizeneinrichtung 202x ist schematisch in Fig. 2 dargestellt. Sie umfaßt eine rotierende Matrizentrommel 204x mit einer Vielzahl von über die Umfangsfläche verteilten Matrizenbohrungen 206x. Das in die Matrizentrommel 204x eingeführte Mischgut aus der Vormischeinrichtung 200x wird innerhalb der Matrizentrommel 204x einer Walkund Knetbehandlung durch Kollerwalzen 208x, ggf. unter Wärmezufuhr, unterworfen, die um eine Achse 210x an der Innenumfangsfläche der Matrizentrommel 204x laufen und sich dabei um ihre eigene Achse drehen. Durch diese Walk- und Knetbehandlung wird das Mischgut auf eine Temperatur in der Größenordnung von 105°C-130°C gebracht (unter der Voraussetzung, daß die Hauptbestandteile der Mischkomponente Kunststoff Polyethylen und Polypropylen sind).

Auf diese Weise werden die Kunststoffanteile wenigstens teilweise thermoplastifiziert und mit den Getreidestrohfasern vermischt. Das thermoplastifizierte Gemisch wird durch die Matrizenbohrungen 206x ausgedrückt, so daß sich am Ausgang der Bohrungen 206x Würstchen 212x bilden. Diese Würstchen 212x werden im Zuge des Umlaufs der Matrizentrommel 204x durch ein Schabmesser 214x abgeschnitten und damit zu einzelnen Pellets gemacht. Die Pellets 216x gelangen über eine an das Schabmesser 214x anschließende Rutsche 218x auf ein Förderband 220x, durch welches sie einem Schneckenextruder 24x zugeführt werden.

Der Schneckenextruder 24x umfaßt einen Schneckenzylinder 26x mit einem Innendurchmesser D und innerhalb dieses Schneckenzylinders 26x einen eingängigen Schneckenkörper 224x. Der Schneckenkörper 224x bildet in dem Schneckenzylinder 26x eine Einzugszone 226x von der Länge 3D, eine Kompressionszone 228x mit der Länge 7D und eine Austragszone 230x mit der Länge 5D. Die Schneckensteigung beträgt 0,8D.

Das Vorgemisch gelangt von dem Fülltrichter 222x in einen Beschickungsschacht 231x, der in Achsrichtung der Schnecke eine Ausdehnung von ca. 2D und in Richtung senkrecht zur Zeichenebene eine Ausdehnung entsprechend dem Durchmesser D besitzt. Im Einzugsbereich und ggf. darüber hinaus sind an der Innenumfangsfläche des Schneckenzylinders 26x Hemmnuten 232x vorgesehen, die eine Tiefe von etwa 3 mm besitzen. Diese Hemmnuten 232x sind dazu bestimmt, ein Mitdrehen des eingefüllten Mischguts mit dem Schneckenkörper 224x zu verhindern. Die Hemmnuten laufen in Achsrichtung des Schneckenkörpers 224x zum rechten Ende des Schneckenzylinders hin flach aus. Der Schneckenzylinder 26x ist über seine Achslänge verteilt mit ringförmigen Heizkörpern 234x versehen. Diese Heizkörper 234x können elektrisch oder mit Dampf beheizt sein. Sie sind insbesondere bei Arbeitsbeginn des Schneckenextruders 24x von Bedeutung. Im stationären Betrieb können sie unter Umständen abgeschaltet werden, da allein durch die Knetarbeit, welcher das Mischgut unterworfen wird, eine Erwärmung eintritt.

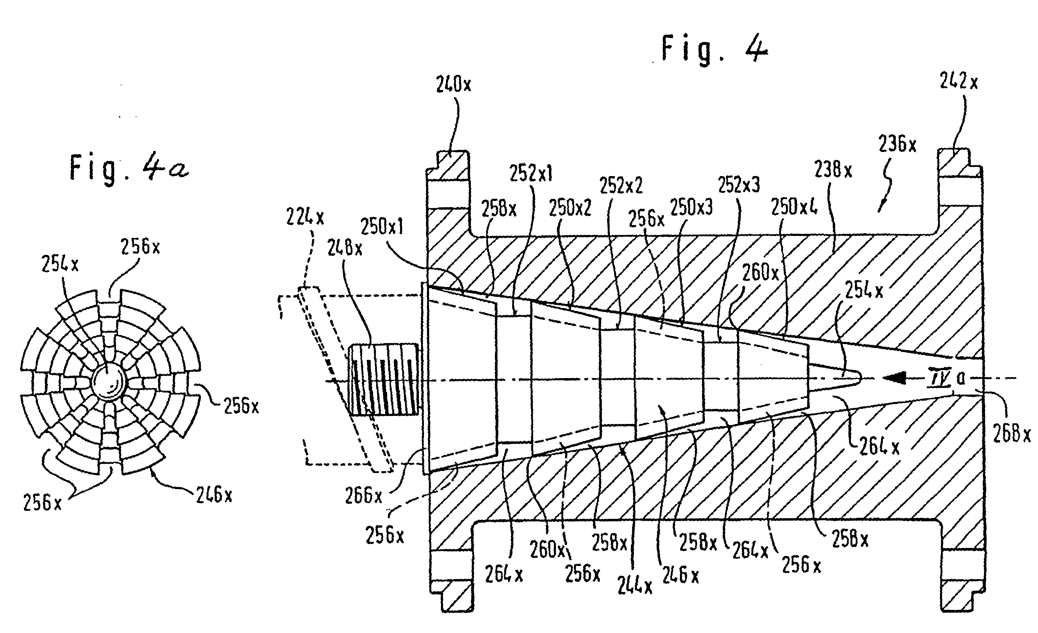

An den Schneckenzylinder schließt sich eine Stau- und Homogenisiereinrichtung 236x an, welche im Detail in den Fig. 4 und 4a dargestellt ist.

Diese Stau- und Homogenisiereinrichtung 236x umfaßt ein Durchflußrohr 238x mit einem Anschlußflansch 240x zum Anschluß an den Schneckenzylinder 26x und einem weiteren Anschlußflansch 242x zur Verbindung mit einer später zu beschreibenden Verteilereinrichtung. Das Durchflußrohr 238x weist einen konischen Durchgangskanal 244x auf, innerhalb welchem ein Kegelstumpfkörper 246x aufgenommen ist. Der Kegelstumpfkörper 246x ist an dem Schneckenkörper 224x durch einen Schraubzapfen 248x lösbar befestigt. Der Kegelstumpfkörper 246x ist stufenförmig ausgebildet. Seine Mantelfläche setzt sich zusammen aus konischen Abschnitten 250x1, 250x2, 250x3 und 250x4 sowie dazwischenliegenden zylindrischen Abschnitten 252x1, 252x2 und 252x3 sowie einer Spitze 254x. Im Bereich der konischen Abschnitte 250x1-250x4 sind Nuten 256x eingeformt. Diese Nuten 256x sind in ihrer Tiefe so bemessen, daß ihre Sohle jeweils in die angrenzenden zylindrischen Abschnitte 252x1, 252x2 und 252x3 bündig ausläuft. Die konischen Abschnitte 250x1 liegen mit ihren stromaufwärtigen Enden der Innenumfangsfläche des konischen Durchgangskanals 244x unmittelbar benachbart oder in Kontakt mit diesem. Zwischen den konischen Abschnitten 250x1-250x4 und dem konischen Durchgangskanal 244x sind Spaltbereiche 258x definiert.

Die axiale Länge der konischen Abschnitte 250x1-250x4 ist größer als die axiale Länge der zylindrischen Abschnitte 252x1-252x3. Vorzugsweise sind die konischen Abschnitte und die zylindrischen Abschnitte in ihrer axialen Länge jeweils untereinander gleich. Die Nuten 256x entsprechen in ihrem Querschnitt an der jeweils engsten Stelle 260x annähernd den größten nach vorangehender Reinigung der Kunststoffabfälle noch zu erwartenden Fremdkörpern.

In den Spaltbereichen 258x zwischen den konischen Abschnitten 250x1-250x4 und der Innenumfangsfläche des konischen Durchgangskanals 244x sind durch das Zusammenwirken mit den Nuten 256x Intensivscherzonen ausgebildet. An die Intensivscherzonen 258x schließen sich jeweils Entspannungszonen 264x im Bereich der zylindrischen Abschnitte 252x1-252x3 sowie im Bereich der Spitze 254x an. Die Axialposition des Kegelstumpfkörpers 246x innerhalb des Durchgangskanals 244x kann durch eine oder mehrere Beilagscheiben 266x an der Verbindungsstelle zwischen dem Kegelstumpfkörper 246x und dem Schneckenkörper 224x eingestellt werden. Auf diese Weise kann auch der Abstand der durchmessergrößeren stromaufwärtigen Enden der konischen Abschnitte 250x1-250x4 von der Innenumfangsfläche des konischen Durchgangskanals 244x variiert werden. Der Kegelstumpfkörper 246x kann aus einzelnen konischen und zylindrischen Scheiben zusammengesetzt sein.

Die durch den Schneckenextruder 24x thermoplastifizierte Masse wird durch den am Ausgang des Schneckenextruders 24x herrschenden Förderdruck in den konischen Durchgangskanal 244x hineingefördert. Im stromaufwärtigen Bereich des ersten konischen Abschnitts 250x1 wird die gesamte thermoplastifizierte Masse von den Nuten 256x aufgenommen und durch diese hindurchgefördert. Entlang dem konischen Abschnitt 250x1 erfolgt eine periphere, radiale und axiale Durchmischung innerhalb der Intensivscherzone 258x, die mit zunehmender Spaltweite der Intensivscherzone 258x zunimmt. Durch den sich in Extrusionsrichtung öffnenden Spaltbereich 258x (Intensivscherzone) werden Störstoffe, nicht plastifiziertes Material und thermisch geschädigtes Material ständig mitgenommen und es entstehen keine Ablagerungen und Verstopfungen. Produktionsausfälle werden auf diese Weise vermieden.

In der Entspannungszone 264x erfolgt eine weitere Durchmischung der Kunststoffschmelze bei geringen Scherbeanspruchungen. Im Bereich der weiteren konischen bzw. zylindrischen Abschnitte wiederholen sich diese Vorgänge.

Besonders vorteilhaft wirkt sich die durch die Konizität des Durchgangskanals 244x und des Kegelstumpfkörpers 246x verursachte fortlaufende Reduktion des Durchflußquerschnitts aus. Aufeinanderfolgende freie Querschnitte reduzieren sich in Extrusionsrichtung und es tritt eine Massedruck- und Temperaturerhöhung und als Folge hiervon eine Fließgeschwindigkeitserhöhung und eine Verbesserung der Fließfähigkeit der Kunststoffschmelze ein. Andererseits nimmt die Umfangsgeschwindigkeit in Extrusionsrichtung wegen des abnehmenden Durchmessers ab, so daß auch die Scherwirkung in Extrusionsrichtung abnimmt. Auf diese Weise wird es möglich, thermisch besonders empfindliche Kunststoffkompositionen mit schlechten Fließeigenschaften ohne thermische Schädigung zu verarbeiten und stofflich zu homogenisieren. Dadurch, daß die Bodenflächen der Nuten 256x bündig in die Umfangsflächen der zylindrischen Abschnitte 252x1-252x3 übergehen, werden tote Ecken vermieden. Letztlich kann die Qualität der am Ausgang der Stau- und Mischeinrichtung verfügbaren thermoplastifizierten Masse insbesondere bezüglich der Homogenität und der Freiheit von thermisch geschädigten Bestandteilen verbessert werden. Dadurch wird die Einarbeitbarkeit von Naturstoffen, insbesondere Naturfasern wie Getreidestrohfasern, ermöglicht. Im Falle einer heterogenen Kunststoffschmelze schmilzt ein höherer Anteil des Kunststoffgemisches auf und es erfolgt eine Verbesserung der stofflichen Homogenität der Kunststoffschmelze. Durch die Axialverstellbarkeit des Kegelstumpfkörpers lassen sich die Behandlungsbedingungen dem jeweiligen Kunststoffgemisch anpassen. Es ist auch möglich, die Größe der Nuten 256x zu variieren. Dadurch, daß diese im Querschnitt größer gemacht werden, als die zu erwartenden harten Fremdkörper, wird ein Festsetzen von Störstoffen verhindert.

Eine besonders feinfühlige Anpassung an unterschiedliche Verfahrensbedingungen wird dadurch ermöglicht, daß die zylindrischen Abschnitte und die konischen Abschnitte in ihrer Form und Länge verändert werden. Hierzu ist besonders vorteilhaft, wenn der Kegelstumpfkörper 246x aus einzelnen austauschbaren Abschnitten zusammengesetzt ist.

Die Homogenisierungswirkung der Stau- und Homogenisiereinrichtung erlaubt es, die Länge des Schneckenextruders zu verkürzen und damit den Investitionsaufwand durch den Schneckenextruder zu verringern.

Die Stau- und Homogenisiereinrichtung ist für die Druckhöhe am Eingang der nachfolgenden Vorprofilbildungskanäle verantwortlich.

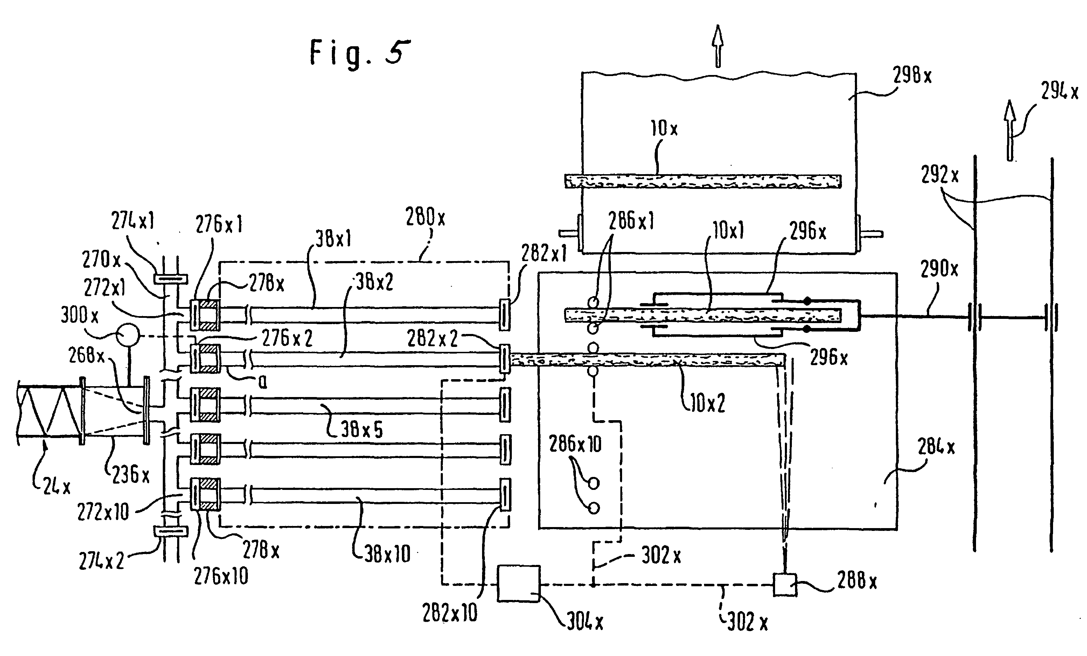

In Fig. 5 erkennt man einen Teil des Schneckenextruders 24x und die Stau- und Homogenisiereinrichtung 236x wieder. Der Ausgang der Stau- und Homogenisiereinrichtung 236x ist mit 268x bezeichnet. Hier ist vermittels des in Fig. 4 mit 242x bezeichneten Flansches eine Verteilerleitung 270x angeschlossen. Die Verteilerleitung 270x besitzt über ihre Länge verteilt eine Mehrzahl von, z.B. 10, Kanalbeschickungsanschlüssen 272x1-272x10. An den beiden Enden der Verteilerleitung 270x sind Reinigungsventile 274x1 und 274x2 angebracht. An jeden der Kanalbeschickungsanschlüsse 272x1 ist ein Vorprofilbildungskanal 38x1-38x10 angeschlossen und zwar jeweils über ein zugehöriges Anschlußventil 276x1-276x10. Die Anschlußventile 276x1-276x10 sind dabei mit dem jeweils zugehörigen Vorprofilbildungsknal 38x1-38x10 über eine thermische Isolierung 278x verbunden. Die Vorprofilbildungskanäle 38x1-38x10 sind stationär in einem Kühlbad 280x aufgenommen. An den Enden der Vorprofilbildungskanäle 38x1-38x10 sind Austrittsschieber 282x1-282x10 angebracht. An die Austrittsschieber 282x1-282x10 schließt sich eine Ablagefläche 284x an, welche bündig mit der Bodenfläche der Vorprofilbildungskanäle 38x1-38x10 liegt. Im Bereich der Ablagefläche 284x ist zu jedem Vorprofilbildungskanal 38x1-38x10 eine Gruppe von Abzugswalzen 286x1-286x10 vorgesehen.

Die Auffüllung der einzelnen Vorprofilbildungskanäle 38x1-38x10 geschieht folgendermaßen:
Zunächst soll der oberste Vorprofilbildungskanal 38x1 betrachtet werden. Es wird angenommen, daß dieser von einem vorangehenden Füllvorgang bereits gefüllt ist und daß sich in ihm ein Vorprofil gebildet hat, welches durch Abkühlung in dem Wasserbad 280x abgekühlt und verfestigt worden ist. Sobald dieses Vorprofil eine ausreichende Abkühlung erfahren hat, wird zunächst das obere Reinigungsventil 274x1 kurzzeitig geöffnet, so daß in dem oberen Teil der Verteilerleitung 270x etwa enthaltene erstarrte Masse ausgestossen werden kann. Dann wird das Anschlußventil 276x1 geöffnet, während alle anderen Anschlußventile 276x2-276x10 geschlossen sind. Gleichzeitig wird der Austrittsschieber 282x1 geöffnet, während alle anderen Austrittsschieber 282x2-282x10 geschlossen bleiben. Nunmehr steht der Druck der Schmelze an dem linken Ende des Vorprofilbildungskanals 38x1 an und kann das in diesem bereits erhärtete Vorprofil durch den Austrittsschieber 282x1 ausschieben. Der Vorprofilbildungskanal 38x1 wird dabei in seinem Abschnitt a intensiv gekühlt, so daß sich am Vorlaufende der neu in den Vorprofilbildungskanal 38x1 eintretenden Schmelze rasch ein erhärteter Pfropfen bildet. Die neuzufließende Schmelze schiebt das in dem Vorprofilbildungskanal vorher gebildete und erhärtete Vorprofil 10x1 vor sich her. Dabei gelangt dieses Vorprofil 10x1 in den Bereich der Abzugswalzengruppe 286x1. Sobald das Vorprofil 10x1 diejenige Stellung erreicht hat, in der sich nach Fig. 5 das Vorprofil 10x2 befindet, wird diese Stellung durch eine Fotozelle 288x sensiert (man beachte, daß die Position des Vorprofils 10x2 hier nicht dem realistischen Verfahrensablauf entspricht, sondern nur eingezeichnet ist, um den Sensiervorgang zu erläutern). Wenn die Fotozelle 288x feststellt, daß das Vorprofil 10x1 mit seinem Vorlaufende in den Bereich des von der Fotozelle 288x ausgesendeten Lichtstrahls eingetreten ist, so beginnt der Abzug des Vorprofils 10x1 durch die Abzugswalzengruppe 286x1. Die Abzugsgeschwindigkeit der Abzugswalzengruppe 286x1 wird dabei so eingestellt, daß das Vorprofil 10x1 schneller abgezogen wird als das Vorlaufende der neu in den Vorprofilbildungskanal 38x1 einfliessenden Schmelze nach rechts wandert. Auf diese Weise wird ein Abstand zwischen dem aus dem Vorprofilbildungskanal 38x1 abgezogenen Vorprofil 10x1 und dem Vorlaufende des in den Vorprofilbildungskanal 38x1 neueintretenden Schmelzflusses gewonnen. Aufgrund dieser Abstandsbildung überschreitet das Nachlaufende des Vorprofils 10x1 den Austrittsschieber 282x1 bevor die neueintretende Schmelze in dem Vorprofilbildungskanal 38x1 den Ort des Austrittsschiebers 282x1 erreicht hat. Der Austrittsschieber 282x1 wird dann geschlossen. Nach Schließen des Austrittsschiebers 282x1 wird das Vorprofil 10x1 durch die Abzugswalzengruppe 286x1 weiter in diejenige Position gebracht, in der es in Fig. 5 gezeigt ist. Ein Fördergerät 290x ist auf Führungsschienen 292x in Pfeilrichtung 294x verschiebbar. In Fig. 5 befindet sich dieses Fördergerät 290x in Aufnahmestellung gegenüber dem soeben ausgeschobenen Vorprofil 10x1, so daß das Fördergerät 290x mit Klemmbacken das Vorprofil 10x1 erfassen und auf einem Förderband 298x ablegen kann. Mittels des Förderbands 298x werden die Vorprofile 10x der Weiterverarbeitung zugeführt.

Andererseits wird nach erfolgter Schließung des Absperrschiebers 282x1 der Vorprofilbildungskanal 38x1 vollständig aufgefüllt. Die Auffüllung erfolgt solange, bis am Ausgang 268x der Stau- und Homogenisiereinrichtung 236x mittels eines Drucksensors 300x ein bestimmter Schaltdruck erreicht wird.

Ist dieser Schaltdruck erreicht, wird das Anschlußventil 276x1 geschlossen. Nunmehr wird die in dem Vorprofilbildungskanal 38x1 eingetretene Schmelze während einer vorbestimmten Zeit durch das Kühlbad 280x abgekühlt, solange, bis auch diese neue Schmelzfüllung als ausgehärtetes Vorprofil ausgestossen werden kann.

Das Isolierelement 278x sorgt dafür, daß eine thermische Trennung zwischen der hohen Temperatur der im Kanalbeschikkungsanschluß 272x1 anstehenden Schmelze und der Intensivkühlzone a innerhalb des Kühlbads 280x aufrecht erhalten wird.

Nach Schließung des Anschlußventils 276x1 fördert der Schnekkenextruder 24x weiter. Es wird deshalb nunmehr das Anschlußventil 276x2 gleichzeitig mit dem Austrittsschieber 282x2 geöffnet und es wiederholt sich der vorher für den Vorprofilbildungskanal 38x1 beschriebene Vorgang im Vorprofilbildungskanal 38x2. Es werden nacheinander sämtliche Vorprofilbildungskanäle 38x1-38x5 unter Ausstoßung des in ihnen jeweils gebildeten Vorprofils mit Schmelze neu befüllt. Der Übergang von der Schmelzbefüllung in einen der Vorprofilbildungskanäle 38x1 zur Schmelzbefüllung des jeweils nächsten Vorprofilbildungskanals kann sehr rasch erfolgen, so daß die stetige Förderung durch den Schneckenextruder 24x nicht unterbrochen werden muß. Falls eine Verzögerung nicht zu verhindern ist, so kann am Ende des Schneckenextruders 24x oder am Ende der Stau- und Homogenisiereinrichtung 236x oder im Bereich der Verteilerleitung 270x eine Puffereinrichtung vorgesehen sein, welche während der Schließung sämtlicher Anschlußventile Schmelze aufnimmt und diese nach erfolgter Öffnung des jeweils nächst zu öffnenden Anschlußventils wieder abgibt. Diese Puffereinrichtung kann von einem Rezipienten gebildet sein, der einen gegen Federdruck verschiebbaren Kolben enthält. Nach Neubefüllung der Vorprofilbildungskanäle 38x1-38x5 wird das Reinigungsventil 274x2 geöffnet, so daß der untere Abschnitt der Verteilerleitung 270x gereinigt wird. Nach erfolgter Reinigung beginnt die Füllung des Vorprofilbildungskanals 38x10 unter gleichzeitigem Ausschub des in ihm vorher erhärteten Vorprofils. Anschließend werden dann die Vorprofilbildungskanäle 38x9-38x6 neu beschickt. Auf diese Weise ist sichergestellt, daß die Vorprofilbildungskanäle nicht mit zu früh erstarrter Schmelze beschickt werden.

Die Fotozelle 288x ist über eine Signalleitung 302x mit den Abzugswalzengruppen verbunden, so daß die jeweils geforderte Abzugswalzengruppe wirksam wird, sobald ein Vorprofil die Stellung erreicht hat, in welcher das Vorprofil 10x2 gemäß Fig. 5 gezeigt ist. Weiterhin ist die Fotozelle 288x über einen Verzögerungsschalter 304x mit den Absperrschiebern 282x1-282x10 verbunden, so daß der jeweils geforderte Absperrschieber in Schließstellung gebracht wird, wenn eine vorbestimmte Zeit seit dem Abzugsbeginn durch die zugehörige Abzugswalzengruppe vergangen ist.

In Fig. 1 erkennt man die Ablagefläche 284x und das an diese anschließende Förderband 298x. Das Fördergerät 290x zum Umsetzen der Vorprofile 10x ist in Fig. 1 nur schematisch dargestellt. Die Vorprofile 10x bewegen sich auf dem Förderband 298x quer zu ihrer Achsrichtung. Durch entsprechend langsamen Antrieb des Förderbands 298x kommt die Verweilzeit von ca. 5-10 Stunden und mehr zustande, die benötigt wird, um die Vorprofile 10x dem Schwundprozeß zu unterwerfen, an den anschließend dann erst eine spanabhebende Bearbeitung stattfindet.

In Fig. 1 erkennt man bei 60x eine spanabhebende Bearbeitungsstation. An die spanabhebende Bearbeitungsstation 60x schließt sich gewünschtenfalls unter Einschaltung eines Zwischenlagers eine Station 306x zum Aufbringen einer Oberflächenvergütungsschicht an. Hieran anschließend kann ggf. nach einem weiteren Zwischenlager eine Rahmenfertigungsstation 307x vorgesehen sein.

Die Extruderschnecke kann insbesondere als eingängige Extruderschnecke ausgebildet sein.

## Patentansprüche

1. EIN-Schneckenextruder (24x) zur Verarbeitung von thermoplastifizierbaren Massen, umfassend einen Schneckenzylinder (26x), eine in diesem Schneckenzylinder (26x) aufgenommene Schnecke (224x), eine Einfüllstelle (230x) für das zu verarbeitende Material in einem ersten Endbereich des Schneckenzylinders (26x), eine Ausschubzone (236x,268x) für thermoplastifizierte Masse in einem zweiten Endbereich des Schneckenzylinders (26x), wobei zur Homogenisierung der thermoplastifizierten Masse in dem oder in Anschluß an den zweiten Endbereich des Schneckenzylinders (26x) eine Homogenisierungskammer (244x) ausgebildet ist, welche im Anschluß an ihr schneckenfernes, stromabwärtiges Ende einen Homogenisierungskammerausfluß (268x) besitzt, wobei weiter in dieser Homogenisierungskammer (244x) ein mit dem materialflußabwärtigen Ende der Schnecke (224x) zur gemeinsamen Drehung verbundener Homogenisierungsrotor (246x) angeordnet ist, wobei weiter durch den Homogenisierungsrotor (246x) einerseits und durch die Umfangsfläche der Homogenisierungskammer (244x) andererseits in abwechselnder Reihenfolge Zonen (258x) von verengtem Durchflußquerschnitt und Zonen (264x) von erweitertem Durchflußquerschnitt gebildet sind und wobei weiter eine Zone (258x) verengten Durchflußquerschnitts durch einen stauenden Rotorabschnitt (250x) und eine in Flußrichtung anschließende Zone (264x) erweiterten Durchflußquerschnitts durch einen gegenüber dem stauenden Rotorabschnitt (250x) radial zurückgesetzten Rotorabschnitt (252x) jeweils nach radial innen begrenzt sind,
**dadurch gekennzeichnet,**
**daß** in die Mantelfläche (250x) eines stauenden Rotorabschnitts (250x) mindestens eine den stauenden Rotorabschnitt (250x) überbrückende, nach radial außen offene Nut (256x) eingearbeitet ist.

2. EIN-Schneckenextruder nach Anspruch 1,
**dadurch gekennzeichnet,**
**daß** der Innendurchmesser der Umfangsfläche der Homogenisierungskammer (244x) in Flußrichtung der thermoplastifizierten Masse abnimmt und daß der Homogenisierungsrotor (246x) eine dem Durchmesserverlauf der Homogenisierungskammer (244x) annähernd folgende Hüllfläche besitzt.

3. EIN-Schneckenextruder nach Anspruch 2,
**dadurch gekennzeichnet,**
**daß** die Homogenisierungskammer (244x) einen konischen Verlauf und der Homogenisierungsrotor (246x) eine diesem konischen Verlauf angenäherte konische Hüllfläche besitzt.

4. EIN-Schneckenextruder nach einem der Ansprüche 1 - 3,
**dadurch gekennzeichnet,**
**daß** die Mantelfläche (250x) eines stauenden Rotorabschnitts (250x) mit der Umfangsfläche der Homogenisierungskammer (244x) einen sich in Flußrichtung erweiternden Durchflußspalt (258x) bildet.

5. EIN-Schneckenextruder nach Anspruch 4,
**dadurch gekennzeichnet,**
**daß** die Mantelfläche (250x) des stauenden Rotorabschnitts (250x) im wesentlichen konisch ist.

6. EIN-Schneckenextruder nach einem der Ansprüche 1 - 5,
**dadurch gekennzeichnet,**
**daß** ein radial zurückgesetzter Rotorabschnitt (252x) eine annähernd zylindrische Mantelfläche (252x) besitzt.

7. EIN-Schneckenextruder nach einem der Ansprüche 1 - 6,
**dadurch gekennzeichnet,**
**daß** die Mantelfläche (250x) eines stauenden Rotorabschnitts (250x) an dessen flußaufwärtigem Ende einen größeren Durchmesser besitzt als ein flußaufwärts anschließender, radial zurückgesetzter Rotorabschnitt (252).

8. EIN-Schneckenextruder nach einem der Ansprüche 1 - 7,
**dadurch gekennzeichnet,**
**daß** die Nut (256x) im wesentlichen parallel zu einer die Rotorachse enthaltenden Ebene verläuft.

9. EIN-Schneckenextruder nach Anspruch 8,
**dadurch gekennzeichnet,**
**daß** der Nutboden am stromaufwärtigen Ende eines stauenden Rotorabschnitts (250x) im wesentlichen stufenlos an die Mantelfläche (252x) eines stromaufwärts angrenzenden, radial zurückgesetzten Rotorabschnitts (252x) anschließt und am stromabwärtigen Ende des stauenden Rotorabschnitts (250x) im wesentlichen stufenlos an die Mantelfläche (252x) des stromabwärts anschließenden, radial zurückgesetzten Rotorabschnitts (252x) anschließt und zwischen den beiden Enden des jeweiligen stauenden Rotorabschnitts (250x) im wesentlichen stetig, vorzugsweise geradlinig, verläuft.

10. EIN-Schneckenextruder nach Anspruch 9,
**dadurch gekennzeichnet,**
**daß** der Nutboden der Nut (256x) eines stauenden Rotorabschnitts (250x) an mindestens einem Ende dieses stauenden Rotorabschnitts (250x) über einen Knick in die Mantelfläche (252x) des jeweils anschließenden, radial zurückgesetzten Rotorabschnitts (252x) anschließt.

11. EIN-Schneckenextruder nach einem der Ansprüche 1 - 10,
**dadurch gekennzeichnet,**
**daß** am stromaufwärtigen Ende und am stromabwärtigen Ende des Homogenisierungsrotors (246x) jeweils ein stauender Rotorabschnitt (250x1,250x4) vorgesehen ist.

12. EIN-Schneckenextruder nach einem der Ansprüche 1 - 11,
**dadurch gekennzeichnet,**
**daß** der Homogenisierungsrotor (246x) mindestens zwei stauende Rotorabschnitte (250x), vorzugsweise mindestens drei stauende Rotorabschnitte (250x) und höchst vorzugsweise mindestens vier stauende Rotorabschnitte (250x), aufweist.

13. EIN-Schneckenextruder nach einem der Ansprüche 1 - 12,
**dadurch gekennzeichnet,**
**daß** der Homogenisierungsrotor (246x) an seinem stromabwärtigen Ende eine Spitze (254x) von verringertem Durchmesser besitzt.

14. EIN-Schneckenextruder nach Anspruch 13,
**dadurch gekennzeichnet,**
**daß** die Spitze (254x) konisch ausgebildet ist.

15. EIN-Schneckenextruder nach einem der Ansprüche 1 - 14,
**dadurch gekennzeichnet,**
**daß** der Querschnitt der Nut (256x) derart bemessen ist, daß er den größten zu erwartenden Hartstoffteilchen in dem zu verarbeitenden Material Durchtritt gewährt.

16. EIN-Schneckenextruder nach einem der Ansprüche 1 - 15,
**dadurch gekennzeichnet,**
**daß** ein stauender Rotorabschnitt (250x) eine Mehrzahl von Nuten (256x) über seinen Umfang verteilt aufweist.

17. EIN-Schneckenextruder nach einem der Ansprüche 1 - 16,
**dadurch gekennzeichnet,**
**daß** der Homogenisierungsrotor (246x) lösbar an dem stromabwärtigen Ende der Schnecke (224x) angebracht ist.

18. EIN-Schneckenextruder nach einem der Ansprüche 1 - 17,
**dadurch gekennzeichnet,**
**daß** die Axialstellung des Homogenisierungsrotors (246x) relativ zu der Schnecke (224x) variabel ist.

19. EIN-Schneckenextruder nach Anspruch 18,
**dadurch gekennzeichnet,**
**daß** zur Variation der Axialstellung des Homogenisierungsrotors (246x) gegenüber der Schnecke (224x) zwischen eine stromabwärtige Endfläche der Schnecke (224x) und eine stromaufwärtige Endfläche des Homogenisierungsrotors (246x) Beilagscheiben (266x) im Umgebungsbereich einer zentralen Verbindung (248x) zwischen der Schnecke (224x) und dem Homogenisierungsrotor (246x) vorgesehen sind.

20. EIN-Schneckenextruder nach einem der Ansprüche 1 - 19,
**dadurch gekennzeichnet,**
**daß** die stauenden Rotorabschnitte (250x) und die radial zurückgesetzten Rotorabschnitte (252x) von zusammengesetzten Einzelkomponenten gebildet sind.

21. EIN-Schneckenextruder nach Anspruch 20,
**dadurch gekennzeichnet,**
**daß** die Einzelkomponenten (250x,252x) lösbar miteinander verbunden sind.

22. EIN-Schneckenextruder nach einem der Ansprüche 1 - 21,
**dadurch gekennzeichnet,**
**daß** die axiale Länge der stauenden Rotorabschnitte (250x) größer ist als die axiale Länge der radial zurückgesetzten Rotorabschnitte (252x).

23. EIN-Schneckenextruder nach einem der Ansprüche 1 - 22,
**dadurch gekennzeichnet,**
**daß** mehrere, vorzugsweise alle, stauenden Rotorabschnitte (250x) gleiche axiale Länge besitzen oder/und daß mehrere, vorzugsweise alle, radial zurückgesetzten Rotorabschnitte (252x) gleiche axiale Länge besitzen.

24. EIN-Schneckenextruder nach einem der Ansprüche 1 - 23,
**dadurch gekennzeichnet,**
**daß** die axiale Länge mindestens eines stauenden Rotorabschnitts (250x) und/oder mindestens eines radial zurückgesetzten Rotorabschnitts (252x) durch Beilagscheiben veränderbar ist.

25. EIN-Schneckenextruder nach einem der Ansprüche 1 - 24,
**dadurch gekennzeichnet,**
**daß** die Mantelfläche (250x) zumindest eines stromaufwärtigen, stauenden Rotorabschnitts (250x) an ihrem stromaufwärtigen Ende einen Außendurchmesser besitzt, welcher gleich dem Innendurchmesser der Umfangsfläche der Homogenisierungskammer (244x) in der zugehörigen Axialposition ist.

26. EIN-Schneckenextruder nach einem der Ansprüche 1 - 25,
**dadurch gekennzeichnet,**
**daß** die Homogenisierungskammer (244x) in einem Rohrabschnitt von annähernd entsprechender Länge ausgebildet ist, welcher an mindestens einem Ende Befestigungsmittel (240x,242x) zum Anschluß an den Schneckenzylinder (26x) bzw. einen nachgeschalteten Verbraucher aufweist.

27. Verwendung eines EIN-Schneckenextruders (24x) nach einem der Ansprüche 1 - 26 zur Herstellung einer strangbildungsfähigen Masse aus einem Gemisch von thermoplastischen Kunststoffen und Zuschlagstoffen, insbesondere faserigen Zuschlagstoffen, wie Getreidestroh.

28. Verwendung eines EIN-Schneckenextruders (24x) nach Anspruch 27,
**dadurch gekennzeichnet,**
**daß** das Gemisch in Form von Pellets zugegeben wird, welche die Zuschlagstoffe in den Kunststoffanteil eingeschmolzen enthalten.

29. Verwendung eines EIN-Schneckenextruders (24x) nach einem der Ansprüche 27 und 28,
**dadurch gekennzeichnet,**
**daß** der Kunststoffanteil des Gemisches von Abfallkunststoffen, z.B. von Abfallkunststoffen aus dem Dualen System Deutschland, gebildet ist.

30. Verwendung eines EIN-Schneckenextruders nach einem der Ansprüche 27 - 29,
**dadurch gekennzeichnet,**
**daß** die faserigen Bestandteile des Gemisches in einer Teilchengröße von höchstens 5 mm, vorzugsweise von 3 mm, maximaler Länge vorliegen.

31. Verwendung eines EIN-Schneckenextruders (24x) nach einem der Ansprüche 1 - 30 zur Herstellung von Profilmaterial, insbesondere Profilmaterial für Fenster- und Türenherstellung.

32. Verwendung eines EIN-Schneckenextruders (24x) nach Anspruch 31 zur Befüllung von Profilbildungskanälen (38x) nach dem Intrusionsprinzip.

33. Stau- und Mischelement für einen EIN-Schneckenextruder, welches eine Schneckenspitze ersetzt und als Schneckenverlängerung einer Extruderschnecke (224x) dient,
**dadurch gekennzeichnet,**
**daß** mehrere Kegelstumpfkörper mit durchbrochenen Mantelflächen (250x1-250x4) peripher verteilte Einschnitte (256x) aufweisen und in einer Kombination mit Vollscheiben (252x1-252x3) Intensivscherzonen (258x) und Entspannungszonen (264x) bilden und mit einem hohlkegeligen Zylinderanschlußstück (238x) eines EIN-Schneckenextruders (24x) verbindbar sind.

34. Misch- und Stauelement nach Anspruch 33,
**dadurch gekennzeichnet,**
**daß** die Mantelflächen (250x1-250x4) der Kegelstumpfkörper zur hohlkegeligen Innenfläche des hohlkegeligen Zylinderanschlußstückes (238x) jeweils einen Keilspalt (258x) bilden, der sich in Extrusionsrichtung öffnet.

35. Misch- und Stauelement nach Anspruch 33 oder 34,
**dadurch gekennzeichnet,**
**daß** der große Außendurchmesser der Mantelflächen (250x1-250x4) der Kegelstumpfkörper jeweils masseeintrittseitig den Durchflußweg durch das Zylinderanschlußstück (238x) im Zusammenwirken mit der hohlkegeligen Innenfläche annähernd oder - vorzugsweise - vollständig verschließt.

36. Misch- und Stauelement nach einem der Ansprüche 33 - 35,
**dadurch gekennzeichnet,**
**daß** die Einschnitte (256x) der Kegelstumpfkörper eine Mindestquerschnittsgröße besitzen, welche annähernd gleich und vorzugsweise größer als die maximale Korngröße von körnigen Bestandteilen des zu mischenden Produkts ist.

37. Misch- und Stauelement nach einem der Ansprüche 33 - 36,
**dadurch gekennzeichnet,**
**daß** die Kegelstumpfkörper annähernd gleiche axiale Länge besitzen und vorzugsweise eine größere Länge als die Vollscheiben (252x1-252x3).

38. Misch- und Stauelement nch einem der Ansprüche 33 - 37,
**dadurch gekennzeichnet,**
**daß** die Außendurchmesser der zylindrischen Vollscheiben (252x1-252x3) jeweils durch die Tiefe der Einschnitte (256x) der jeweils angrenzenden Kegelstumpfkörper bestimmt sind.

39. Misch- und Stauelement nach einem der Ansprüche 33 - 38,
**dadurch gekennzeichnet,**
**daß** es eine Spitze besitzt.

40. Misch- und Stauelement nach einem der Ansprüche 33 - 39,
**dadurch gekennzeichnet,**
**daß** es in seiner axialen Lage durch Distanzscheiben (266x) einstellbar ist.

41. Misch- und Stauelement nach einem der Ansprüche 33 - 40,
**dadurch gekennzeichnet,**
**daß** es von axial aufeinander folgenden Einzelelementen gebildet ist, welche gewünschtenfalls in ihrem gegenseitigen Abstand durch Distanzscheiben einstellbar sind.

## Claims

1. Single-screw extruder (24x) for the processing of thermoplasticisable materials, comprising a screw cylinder (26x), a screw (224x) contained in this screw cylinder (26x), an inlet point (230x) for the material to be processed in a first end region of the screw cylinder (26x), a discharge zone (236x, 268x) for thermoplasticised material in a second end region of the screw cylinder (26x), wherein a homogenisation chamber (244x) having a homogenisation chamber outlet (268x) following its screw-remote downstream end is constructed in or adjacent to the second end region of the screw cylinder (26x) for homogenising the thermoplasticised material, wherein further a homogenisation rotor (246x) connected to the downstream end of the screw (224x) for common rotation is arranged in this homogenisation chamber (244x), wherein further zones (258x) of reduced cross-section and zones (264x) of enlarged cross-section are formed alternately by the homogenisation rotor (246x) on the one hand and by the circumferential surface of the homogenisation chamber (244x) on the other hand and wherein further a zone (258x) of reduced cross-section is limited radially internally by a restricting rotor portion (250x) and a zone (264x) of enlarged cross-section, following in the direction of flow, is limited radially internally by a rotor portion (252x) set back radially from the restricting rotor portion (250x), **characterised in that** at least one groove (256x) bridging the restricting rotor portion (250x) and open radially outwardly is worked into the generated surface (250x) of a restricting rotor portion (250x).

2. Single screw extruder according to claim 1, **characterised in that** the internal diameter of the circumferential surface of the homogenisation chamber (244x) decreases in the direction of flow of the thermoplasticised material and **in that** the homogenisation rotor (246x) has an envelope surface substantially following the diameter course of the homogenisation chamber (244x).

3. Single screw extruder according to claim 2, **characterised in that** the homogenisation chamber (244x) has a conical course and the homogenisation rotor (246x) has a conical envelope surface resembling this conical course.

4. Single screw extruder according to any of claims 1 to 3, **characterised in that** the generated surface (250x) of a restricting rotor portion (250x) forms, with the circumferential surface of the homogenisation chamber (244x), a flow gap (258x) which increases in the direction of flow.

5. Single screw extruder according to claim 4, **characterised in that** the generated surface (250x) of the restricting rotor portion (250x) is substantially conical.

6. Single screw extruder according to any of claims 1 to 5, **characterised in that** a rotor portion (252x) set back radially has a substantially cylindrical generated surface (252x).

7. Single screw extruder according to any of claims 1 to 6, **characterised in that** the generated surface (250x) of a restricting rotor portion (250x) has a greater diameter at its upstream end than a rotor portion (252) which is set back radially and follows in a downstream direction.

8. Single screw extruder according to any of claims 1 to 7, **characterised in that** the groove (256x) extends substantially parallel to a plane containing the rotor axis.

9. Single screw extruder according to claim 8, **characterised in that** the groove bottom adjoins the generated surface (252x) of a rotor portion (252x) which is set back radially and follows in an upstream direction, substantially smoothly at the upstream end of a restricting rotor portion (250x), and adjoins the generated surface (252x) of the rotor portion (252x) which is set back radially and follows downstream, substantially smoothly at the downstream end of the restricting rotor portion (250x) and extends substantially continuously, preferably rectilinearly, between the two ends of the respective restricting rotor portion (250x).

10. Single screw extruder according to claim 9, **characterised in that** the groove bottom of the groove (256x) of a restricting rotor portion (250x) adjoins at least one end of this restricting rotor portion (250x) via a kink in the generated surface (252x) of the respectively adjoining rotor portion (252x) which is set back radially.

11. Single screw extruder according to any of claims 1 to 10, **characterised in that** a respective restricting rotor portion (250x1, 250x4) is provided at the upstream end and at the downstream end of the homogenisation rotor (246x).

12. Single screw extruder according to any of claims 1 to 11, **characterised in that** the homogenisation rotor (246x) comprises at least two restricting rotor portions (250x), preferably at least three restricting rotor portions (250x) and at most preferably at least four restricting rotor portions (250x).

13. Single screw extruder according to any of claims 1 to 12, **characterised in that** the homogenisation rotor (246x) has a tip (254x) of reduced diameter at its downstream end.

14. Single screw extruder according to claim 13, **characterised in that** the tip (254x) is conical in construction.

15. Single screw extruder according to any of claims 1 to 14, **characterised in that** the cross-section of the groove (256x) is dimensioned such that it allows the passage of the largest expected particles of hard substance in the material to be processed.

16. Single screw extruder according to any of claims 1 to 15, **characterised in that** a restricting rotor portion (250x) has a plurality of grooves (256x) distributed over its periphery.

17. Single screw extruder according to any of claims 1 to 16, **characterised in that** the homogenisation rotor (246) is mounted detachably on the downstream end of the screw (224x).

18. Single screw extruder according to any of claims 1 to 17, **characterised in that** the axial position of the homogenisation rotor (246x) is variable relative to the screw (224x).

19. Single screw extruder according to claim 18, **characterised in that** shims (266x) are provided in the region surrounding a central connection (248x) between the screw (224x) and the homogenisation rotor (246x) for varying the axial position of the homogenisation rotor (246x) relative to the screw (224x) between a downstream end face of the screw (224x) and an upstream end face of the homogenisation rotor (246x).

20. Single screw extruder according to any of claims 1 to 19, **characterised in that** the restricting rotor portions (250x) and the rotor portions (252x) which are set back radially are formed by assembled individual components.

21. Single screw extruder according to claim 20, **characterised in that** the individual components (250x, 252x) are detachably connected to one another.

22. Single screw extruder according to any of claims 1 to 21, **characterised in that** the axial length of the restricting rotor portions (250x) is greater than the axial length of the rotor portions (252x) which are set back radially.

23. Single screw extruder according to any of claims 1 to 22, **characterised in that** a plurality of, preferably all, restricting rotor portions (250x) have an identical axial length or/and **in that** a plurality of, preferably all, rotor portions (252x) which are set back radially have an identical axial length.

24. Single screw extruder according to any of claims 1 to 23, **characterised in that** the axial length of at least one restricting rotor portion (250x) and/or at least one rotor portion (252x) which is set back radially may be varied by shims.

25. Single screw extruder according to any of claims 1 to 24, **characterised in that** the generated surface (250x) of at least one upstream restricting rotor portion (250x) has, at its upstream end, an external diameter which is identical to the internal diameter of the peripheral face of the homogenisation chamber (244x) in the associated axial position.

26. Single screw extruder according to any of claims 1 to 25, **characterised in that** the homogenisation chamber (244x) is formed in a tube portion of approximately corresponding length and having fixing means (240x, 242x) for attachment to the screw cylinder (26x) or a subsequent consumer at least at one end.

27. Use of a single screw extruder (24x) according to any of claims 1 to 26 for producing an extrudable material from a blend of thermoplastic polymers and additives, in particular fibrous additives such as straw.

28. Use of a single screw extruder (24x) according to claim 27, **characterised in that** the blend is added in the form of pellets, the additives being fused into the plastic content.

29. Use of a single screw extruder (24x) according to either of claims 27 and 28, **characterised in that** the plastic content of the blend is formed from plastic waste, for example from plastic waste from Dual System Deutschland.

30. Use of a single screw extruder according to any of claims 27 to 29, **characterised in that** the fibrous components of the blend have a particle size of at most 5 mm, preferably 3 mm, maximum length.

31. Use of a single screw extruder (24x) according to any of claims 1 to 30 for producing profiled material, in particular profiled material for window and door production.

32. Use of a single screw extruder (24x) according to claim 31 for filling profile-forming ducts (38x) by the intrusion principle.

33. Restricting and mixing element for a single screw extruder which replaces a screw tip and serves as screw extension of an extruder screw (224x), **characterised in that** a plurality of frustoconical members with perforated generated surfaces (250x1-250x4) have peripherally distributed notches (256x) and form intensive shearing zones (258x) and relaxation zones (264x) in a combination with solid discs (252x1-252x3) and may be connected to a hollow conical cylinder connecting piece (238x) of a single screw extruder (24x),

34. Mixing and restricting element according to claim 33, **characterised in that** the generated surfaces (250x1-250x4) of the frustoconical members each form a wedge-shaped gap (258x) with the hollow conical internal surface of the hollow conical cylinder connecting piece (238x), the wedge-shaped gap opening in the extrusion direction.

35. Mixing and restricting element according to claim 33 or 34, **characterised in that** the large external diameter of the generated surfaces (250x1-250x4) of the frustoconical members approximately or - preferably - completely closes, on the respective material entry side, the passage through the cylinder connecting piece (238x) in cooperation with the hollow conical internal surface.

36. Mixing and restricting element according to any of claims 33 to 35, **characterised in that** the notches (256x) in the frustoconical members have a minimum cross-sectional size which is approximately identical to and preferably greater than the maximum grain size of granular components of the product to be mixed.

37. Mixing and restricting element according to any of claims 33 to 36, **characterised in that** the frustoconical members have an approximately identical axial length and preferably a greater length than the solid discs (252x1-252x3).

38. Mixing and restricting element according to any of claims 33 to 37, **characterised in that** the external diameter of the cylindrical solid discs (252x1-252x3) are determined by the respective depth of the notches (256x) of the respectively adjoining frustoconical members.

39. Mixing and restricting element according to any of claims 33 to 38, **characterised in that** it has a tip.

40. Mixing and restricting element according to any of claims 33 to 39, **characterised in that** its axial position is adjustable by spacer discs (266x).

41. Mixing and restricting element according to any of claims 33 to 40, **characterised in that** it is formed by axially succeeding individual elements of which the mutual spacing may be adjusted by spacer discs.

## Revendications

1. Extrudeuse à vis unique (24x) pour le traitement de pâte thermoplastifiable, comprenant un cylindre de vis (26x), une vis (224x) reçue dans ce cylindre de vis (24x), un emplacement de remplissage (230x) pour le matériau à traiter, situé dans une première région d'extrémité du cylindre de vis (26x), une zone (236x, 268x) de refoulement de pâte thermoplastifiée située dans une deuxième région d'extrémité du cylindre de vis (26x), tandis qu'une chambre d'homogénéisation (244x) qui possède un orifice de sortie de chambre d'homogénéisation (268x) qui se raccorde à son extrémité aval éloignée de la vis est formée dans la deuxième région d'extrémité du cylindre de vis (26x) ou en communication avec cette dernière pour l'homogénéisation de la pâte thermoplastifiée, un rotor d'homogénéisation (246x) relié à rotation commune à l'extrémité de la vis (224x) située en aval dans le sens de l'écoulement de matière étant en outre disposé dans cette chambre d'homogénéisation (244x), des zones (258x) à section transversale d'écoulement rétrécie et des zones (264x) à section transversale d'écoulement agrandie étant en outre formées en succession alternée d'une part par le rotor d'homogénéisation (246x) et d'autre part par la surface périphérique de la chambre d'homogénéisation (244x), et chaque zone (258x) à section transversale d'écoulement rétrécie est en outre limitée radialement vers l'intérieur par une partie (250x) de retenue du rotor et par une partie (252x) en retrait radial par rapport à la partie (250x) de retenue du rotor,
**caractérisée en ce que**
au moins une rainure (256x) ouverte radialement vers l'extérieur et surmontant la partie (250x) de retenue du rotor est formée dans la surface d'enveloppe (250x) d'une partie (250x) de retenue du rotor.

2. Extrudeuse à simple vis selon la revendication 1, **caractérisée en ce que** le diamètre intérieur de la surface périphérique de la chambre d'homogénéisation (244x) diminue dans le sens de l'écoulement de la masse thermoplastifiée et **en ce que** le rotor d'homogénéisation (246x) possède une surface d'enveloppe qui suit approximativement l'évolution du diamètre de la chambre d'homogénéisation (244x).

3. Extrudeuse à vis unique selon la revendication 1, **caractérisée en ce que** la chambre d'homogénéisation (244x) s'étend coniquement et le rotor d'homogénéisation (246x) possède une surface d'enveloppe conique adaptée à cette conicité.

4. Extrudeuse à vis unique selon l'une des revendications 1 à 3, **caractérisée en ce que** la surface d'enveloppe (250x) d'une partie (250x) de retenue du rotor forme avec la surface périphérique de la chambre d'homogénéisation (244x) un interstice de passage (258x) qui s'évase dans le sens de l'écoulement.

5. Extrudeuse à vis unique selon la revendication 4, **caractérisée en ce que** la surface d'enveloppe (250x) de la partie (250x) de retenue du rotor est essentiellement conique.

6. Extrudeuse à vis unique selon l'une des revendications 1 à 5, **caractérisée en ce qu'**une partie (252x) en retrait radial du rotor possède une surface d'enveloppe (252x) sensiblement cylindrique.

7. Extrudeuse à vis unique selon l'une des revendications 1 à 6, **caractérisée en ce que** la surface d'enveloppe (250x) d'une partie (250x) de retenue du rotor présente à son extrémité située en amont dans le sens de l'écoulement un diamètre plus grand qu'une partie de rotor (252) en retrait radial qui s'y raccorde en amont.

8. Extrudeuse à vis unique selon l'une des revendications 1 à 7, **caractérisée en ce que** la rainure (256x) s'étend essentiellement parallèlement à un plan contenant l'axe du rotor.

9. Extrudeuse à vis unique selon la revendication 8, **caractérisée en ce qu'**à l'extrémité amont d'une partie (250x) de retenue du rotor, le fond de la rainure se raccorde essentiellement sans gradin à la surface d'enveloppe (252x) d'une partie (252x) en retrait radial du rotor qui lui est adjacente du côté amont, et **en ce qu'**à l'extrémité aval de la partie (250x) de retenue du rotor, le fond de la rainure se raccorde essentiellement sans gradin à la surface d'enveloppe (252x) de la partie (252x) du rotor en retrait radial qui s'y raccorde du côté aval, et s'étend de manière essentiellement constante, de préférence en ligne droite, entre les deux extrémités de chaque partie (250x) de retenue du rotor.

10. Extrudeuse à vis unique selon la revendication 9, **caractérisée en ce que** le fond de la rainure (256x) d'une partie (250x) de retenue du rotor se raccorde à au moins une extrémité de cette partie (250x) de retenue du rotor par l'intermédiaire d'un coude ménagé dans la surface d'enveloppe (252x) de la partie (252x) en retrait radial et adjacente du rotor.

11. Extrudeuse à vis unique selon l'une des revendications 1 à 10, **caractérisée en ce qu'**une partie (250x1, 250x4) de retenue du rotor est chaque fois prévue à l'extrémité amont et à l'extrémité aval du rotor d'homogénéisation (246x).

12. Extrudeuse à vis unique selon l'une des revendications 1 à 11, **caractérisée en ce que** le rotor d'homogénéisation (246x) présente au moins deux parties (250x) de retenue du rotor, de préférence au moins trois parties (250x) de retenue du rotor et au plus de préférence au moins quatre parties (250x) de retenue du rotor.

13. Extrudeuse à vis unique selon l'une des revendications 1 à 12, **caractérisée en ce que** le rotor d'homogénéisation (246x) possède à son extrémité aval une pointe (254x) de diamètre réduit.

14. Extrudeuse à vis unique selon la revendication 13, **caractérisée en ce que** la pointe (254x) présente une configuration conique.

15. Extrudeuse à vis unique selon l'une des revendications 1 à 14, **caractérisée en ce que** la section transversale de la rainure (256x) est dimensionnée de telle sorte qu'elle permet le passage des plus grandes particules de matière dure auxquelles on peut s'attendre dans le matériau à traiter.

16. Extrudeuse à vis unique selon l'une des revendications 1 à 15, **caractérisée en ce qu'**une partie (250x) de retenue du rotor présente une pluralité de rainures (256x) réparties à sa périphérie.

17. Extrudeuse à vis unique selon l'une des revendications 1 à 16, **caractérisée en ce que** le rotor d'homogénéisation (246x) est installé de façon libérable à l'extrémité aval de la vis (224x).

18. Extrudeuse à vis unique selon l'une des revendications 1 à 17, **caractérisée en ce que** la position axiale du rotor d'homogénéisation (246x) par rapport à la vis (224x) peut être modifiée.

19. Extrudeuse à vis unique selon la revendication 18, **caractérisée en ce que** pour modifier la position axiale du rotor d'homogénéisation (246x) par rapport à la vis (224x), entre une surface d'extrémité aval de la vis (224x) et une surface d'extrémité amont du rotor d'homogénéisation (246x), des disques d'écartement (266x) sont prévus dans la région environnant une liaison centrale (248x) entre la vis (224x) et le rotor d'homogénéisation (246x).

20. Extrudeuse à vis unique selon l'une des revendications 1 à 19, **caractérisée en ce que** les parties (250x) de retenue du rotor et les parties (252x) en retrait radial du rotor sont formées de composants individuels assemblés.

21. Extrudeuse à vis unique selon la revendication 20, **caractérisée en ce que** les composants individuels (250x, 252x) sont reliés les uns aux autres de manière libérable.

22. Extrudeuse à vis unique selon l'une des revendications 1 à 21, **caractérisée en ce que** la longueur axiale des parties (250x) de retenue du rotor est plus grande que la longueur axiale des parties (252x) en retrait radial du rotor.

23. Extrudeuse à vis unique selon l'une des revendications 1 à 22, **caractérisée en ce que** plusieurs et de préférence toutes les parties (250x) de retenue du rotor possèdent la même longueur axiale et/ou **en ce que** plusieurs et de préférence toutes les parties (252x) en retrait radial du rotor présentent la même longueur axiale.

24. Extrudeuse à vis unique selon l'une des revendications 1 à 23, **caractérisée en ce que** la longueur axiale d'au moins une partie (250x) de retenue du rotor et/ou d'au moins une partie (252x) en retrait radial du rotor peut être modifiée par des disques d'écartement.

25. Extrudeuse à vis unique selon l'une des revendications 1 à 24, **caractérisée en ce que** la surface d'enveloppe (250x) d'au moins une partie (250x) de retenue du rotor situé en amont présente à son extrémité amont un diamètre extérieur qui est égal au diamètre intérieur de la surface d'enveloppe de la chambre d'homogénéisation (244x) dans la position axiale correspondante.

26. Extrudeuse à vis unique selon l'une des revendications 1 à 25, **caractérisée en ce que** la chambre d'homogénéisation (244x) est formée dans un tronçon de tube de longueur sensiblement correspondante et qui présente à au moins une extrémité des moyens de fixation (240x, 242x) pour le raccordement au cylindre de vis (26x) ou à un consommateur raccordé en aval.

27. Utilisation d'une extrudeuse à vis unique (24x) selon l'une des revendications 1 à 26 pour la préparation d'une pâte extrudable constituée d'un mélange de matière synthétique thermoplastique et de matières d'addition, en particulier de matières d'addition fibreuses, par exemple de la paille de céréales.

28. Utilisation d'une extrudeuse à vis unique (24x) selon la revendication 27, **caractérisée en ce que** le mélange est ajouté sous la forme de paillettes qui contiennent les matières d'addition qui ont été incorporées dans la matière synthétique à l'état fondu.

29. Utilisation d'une extrudeuse à vis unique (24x) selon l'une des revendications 27 et 28, **caractérisée en ce que** la teneur en matière synthétique du mélange est formée de déchets de matière synthétique, par exemple des déchets de matière synthétique du "Dual System" d'Allemagne.

30. Utilisation d'une extrudeuse à vis unique selon l'une des revendications 27 à 29, **caractérisée en ce que** les composants fibreux du mélange se présentent sous la forme de particules d'une longueur maximale de 5 mm, et de préférence de 3 mm.

31. Utilisation d'une extrudeuse à vis unique (24x) selon l'une des revendications 1 à 30, pour la fabrication de matériaux profilés, en particulier de matériaux profilés pour la fabrication de fenêtres et de portes.

32. Utilisation d'une extrudeuse à vis unique (24x) selon la revendication 31, pour le remplissage de canaux (38x) de formation de profilés par le principe d'intrusion.

33. Elément de retenue et de mélange pour une extrudeuse à vis unique, qui remplace une pointe de vis et sert de prolongement d'une vis d'extrusion (224x), **caractérisé en ce que** plusieurs corps tronconiques à surface d'enveloppe perforée (250x1, 251x4) présentent des découpes (256x) réparties à la périphérie, forment en combinaison avec des disques pleins (252x1, 252x3) des zones (258x) de cisaillement intense et des zones de détente (264x) et peuvent être reliés à une pièce conique creuse (238x) de raccordement au cylindre d'une extrudeuse à vis unique (24x).

34. Elément de mélange et de retenue selon la revendication 33, **caractérisé en ce que** les surfaces d'enveloppe (250x1 - 250x4) des corps tronconiques forment chaque fois en direction de la surface intérieure conique creuse de la pièce conique creuse (238x) de raccordement au cylindre un interstice en biseau (258x) qui s'ouvre dans la direction de l'extrusion.

35. Elément de mélange et de retenue selon la revendication 33 ou 34, **caractérisé en ce que** le grand diamètre extérieur des surfaces d'enveloppe (250x1 - 250x4) des corps tronconiques ferme sensiblement ou, de préférence, complètement, le passage d'écoulement du côté de l'entrée de la pâte à travers la pièce (238x) de raccordement au cylindre, en coopération avec la surface intérieure conique creuse.

36. Elément de mélange et de retenue selon l'une des revendications 33 à 35, **caractérisé en ce que** les découpes (256x) des corps tronconiques possèdent une section transversale de taille minimale qui est sensiblement égale et de préférence supérieure à la taille maximale des grains de composants granuleux du produit à mélanger.

37. Elément de mélange et de retenue selon l'une des revendications 33 à 36, **caractérisé en ce que** les corps tronconiques possèdent une longueur axiale sensiblement égale à celle des disques pleins (252x1 - 251x3), et de préférence une longueur plus grande.

38. Elément de mélange et de retenue selon l'une des revendications 33 à 37, **caractérisé en ce que** le diamètre extérieur des disques cylindriques pleins (252x1 - 252x3) est chaque fois défini par la profondeur des découpes (256x) des corps tronconiques chaque fois contigus.

39. Elément de mélange et de retenue selon l'une des revendications 33 à 38, **caractérisé en ce qu'**il présente une pointe.

40. Elément de mélange et de retenue selon l'une des revendications 33 à 39, **caractérisé en ce que** sa longueur axiale peut être ajustée par des disques d'écartement (266x).

41. Elément de mélange et de retenue selon l'une des revendications 33 à 40, **caractérisé en ce qu'**il est formé d'éléments individuels successifs dans le sens axial, dont l'écart mutuel peut éventuellement être ajusté par des disques d'écartement.
